# EUROPÄISCHE PATENTSCHRIFT

(11) **EP 0 499 913 B1**
(45) Veröffentlichungstag und Bekanntmachung des Hinweises auf die Patenterteilung: **17.05.1995**
(21) Anmeldenummer: 92102127.5
(22) Anmeldetag: 08.02.1992
(51) Int. Cl.: A01F 15/14

(54) **Bindevorrichtung**
Binding device
Dispositif de liage

(30) Priorität: 19.02.1991 DE 4104995
(43) Veröffentlichungstag der Anmeldung: 26.08.1992
(73) Patentinhaber: DEERE & COMPANY, Moline, Illinois 61265 (US)
(72) Erfinder: Viaud, Jean, F-57200 Sarreguemines (FR)
(74) Vertreter: Feldmann, Bernhard

(56) Entgegenhaltungen:
- EP-A- 0 293 609
- FR-A- 2 457 636

## Beschreibung

Die Erfindung betrifft eine Bindevorrichtung zum Binden eines zylindrischen Ballens, insbesondere für eine Rundballenpresse, mit zwei Armen zur Führung des Bindemittels zu einer Startstellung in Eingriff mit dem Ballen, die zueinander relativ beweglich sind, gemeinsam eine Ruhestellung an oder nahe einer Stirnseite des Ballens einnehmen und mittels einer Betätigungsvorrichtung entlang der Ballenlängsachse geführt werden. Die Erfindung betrifft ferner ein Verfahren zum Binden eines Ballens.

Bindevorrichtungen für Ballen, insbesondere für Rundballen einer landwirtschaftlich einsetzbaren Rundballenpresse, werden dazu benutzt, Garn um den gebildeten Ballen zu wickeln, um so dessen Auseinanderfallen zu verhindern. Hierzu wird das Garn zunächst mit dem Gut aufgewickelt und anschließend in einer Vielzahl von Windungen um den Umfang des Ballens gewunden. Die Windungen werden über die gesamte Breite des Ballens gelegt, indem bewegliche Arme entlang der Ballenlängsachse das Garn führen, während der Ballen in dem Ballenpreßraum weiter gedreht wird. Nach einer ausreichenden Anzahl von Windungen wird das Garn von der Vorratsrolle abgeschnitten und der Ballen abgelegt. Das Garnende bzw. die Garnenden hängen mit einer mehr oder weniger großen Länge von dem Ballen ab, während das übrige Garn aufgrund seiner Reibung auf der Ballenoberfläche verharrt.

Es hat sich als problematisch bei den herkömmlichen Ballenpressen erwiesen, daß während des Bindevorgangs der Preßvorgang nicht fortgesetzt werden kann und pro Bindevorgang eine große Garnmenge (50 - 80 m) erforderlich ist.

Zur Behebung dieser Probleme wurde bereits vorgeschlagen (SU-A1-1261581), das Garn durch zwei Arme zuzuführen, um so die Bindezeit zu halbieren. Da beide Arme aber zweifach über die gesamte Ballenbreite geführt werden, ist der Garnbedarf trotzdem sehr hoch.

Die der Erfindung zugrunde liegende Aufgabe wird darin gesehen, eine Bindevorrichtung und ein Verfahren vorzuschlagen, die es ermöglichen, mit wenig Garn oder einem anderen Bindemittel auszukommen und die eine feste Haftung des Garns auf dem Ballen erzeugen.

Diese Aufgabe ist erfindungsgemäß durch die Merkmale der Patentansprüch 1 bzw. 15 gelöst worden, wobei in den weiteren Patentansprüchen Merkmale aufgeführt sind, die die Lösung in vorteilhafter Weise weiterentwickeln.

Auf diese Weise beginnt der Bindevorgang erst dann, wenn die Arme zu der Startstellung, in der Regel in der Ballenmitte, gelangt sind, so daß auf dem Weg dorthin kein Bindemittel verbraucht wird. Im Mittenbereich des Ballens wird das Bindemittel sicher gehalten. Erst nach Erreichen der Startstellung wird der Ballen über seine Breite zweifach - nicht aber vierfach wie im Stand der Technik - gebunden, wobei der Bindevorgang im wesentlichen in der Ballenmitte endet. Schließlich wird das Bindemittel zur einen Stirnseite des Ballens geführt und als weiterer Vorteil von einer beiden Armen gemeinsamen Schneidvorrichtung abgetrennt.

Eine kurze Bindezeit bei gleichmäßiger Bindung auf beiden Ballenhälften wird erreicht, wenn die Arme spiegelbildlich bewegt werden.

Der erforderliche Bauaufwand bleibt klein, wenn beide Arme einen Großteil ihres Wegs gemeinsam bewegt werden, was die Verwendung nur eines einzigen Motors möglich macht. Ein Linearmotor, z. B. eine Kolben-Zylinder-Einheit, ist günstig herzustellen; dennoch ist auch die Verwendung eines drehenden Motors möglich.

Beide Arme können als Einheit in einfacher Weise gemeinsam bewegt werden, wenn einer an bzw. auf dem anderen Arm befestigt, d. h. von ihm getragen wird, so daß nur der tragende Arm von dem Linearmotor bewegt werden muß, der von diesem dann auch über seinen gesamten Weg bewegt werden kann.

Eine Möglichkeit, eine Zwangsführung zwischen dem tragenden und dem getragenen Arm herbeizuführen, besteht in der Verwendung eines weiteren Linearmotors, der einenends an dem einen und anderenends an dem anderen Arm angreift und von einer möglichst separat gesteuerten Energiequelle aus bewegt wird.

Die Verwendung eines Kleinrechners zur Veränderung der Bewegungsgeschwindigkeit beider Linearmotoren erlaubt eine manigfaltige Gestaltung des Bindevorgangs und des Bindemittelverbrauchs.

Nach einer anderen Variante einer Zwangsführung wird einer der Arme an einem Anschlag entlang über einen Teil der Breite des Ballens geführt, was durch eine exzentrische Anordnung seines Gelenks gegenüber dem Schwenkpunkt der Arme-Einheit ermöglicht wird.

Die beiden Arme bilden infolge der Federspannung der zwischen ihnen gespannten Feder sofort eine Einheit, wenn der getragene Arm den Anschlag verläßt.

Die Verwendung eines Dämpfungsglieds zwischen den beiden Armen, dessen Dämpfungsgrad möglichst veränderlich ist, macht es möglich, die Bewegung des einen Arms auch dann noch zu steuern, wenn er nicht mehr an dem Anschlag entlang geführt wird.

Durch die Möglichkeit der Steuerung der Bewegungsgeschwindigkeit des Linearmotors zum Bewegen der gesamten Arme-Einheit läßt sich der Bindemittelbedarf optimieren, da diese Einheit schneller in ihre Ruhestellung bewegt werden kann, wenn der Bindevorgang zwar beendet ist, das Bindemittel aber noch mit dem Ballen verbunden ist.

Das erfindungsgemäße Verfahren lehrt die wesentliche Vorgehensweise beim Binden eines Ballens, was mit verschiedenen Vorrichtungen erfolgen kann.

In der Zeichnung sind zwei nachfolgend näher beschriebene Ausführungsbeispiele der Erfindung dargestellt. Es zeigt:
- Fig. 1: einen Bereich einer Rundballenpresse mit einer Bindevorrichtung nach einem ersten Ausführungsbeispiel,
- Fig. 2: die Bindevorrichtung aus Figur 1 in einer perspektivischen Ansicht,
- Fig. 3: die Bindevorrichtung in Draufsicht in einer Ruhestellung,
- Fig. 4: die Bindevorrichtung in Draufsicht in einer Startstellung,
- Fig. 5: die Bindevorrichtung in Draufsicht während des ersten Teils eines Bindevorgangs,
- Fig. 6: die Bindevorrichtung in Draufsicht während des zweiten Teils eines Bindevorgangs,
- Fig. 7: den Bereich der Rundballenpresse mit einer Bindevorrichtung nach einem zweiten Ausführungsbeispiel,
- Fig. 8: die Bindevorrichtung aus Figur 7 in Draufsicht in einer Ruhestellung,
- Fig. 9: die Bindevorrichtung aus Figur 7 in Draufsicht in einer Startstellung,
- Fig. 10: die Bindevorrichtung aus Figur 7 in Draufsicht während des ersten Teils eines Bindevorgangs und
- Fig. 11: die Bindevorrichtung aus Figur 7 in Draufsicht während des zweiten Teils eines Bindevorgangs.

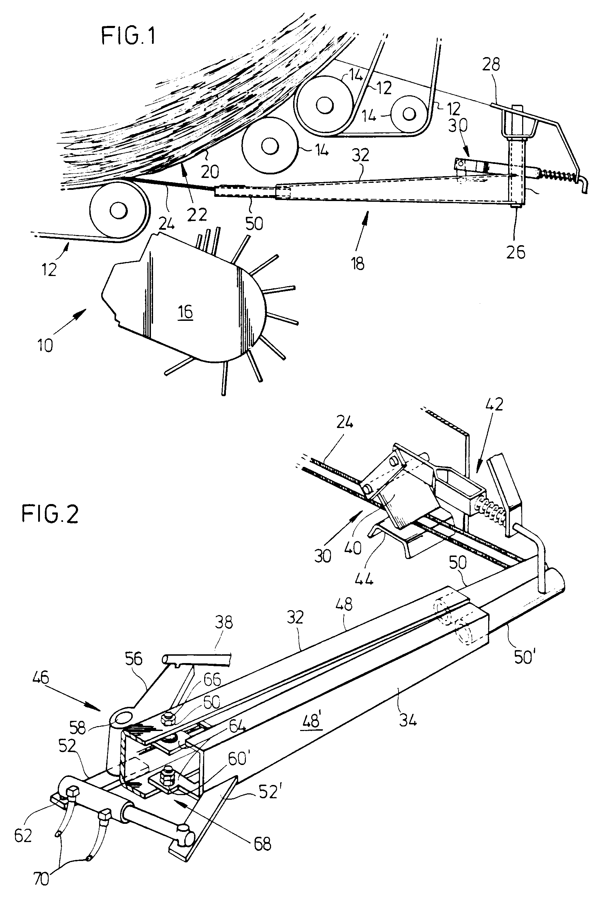

Von einer in Figur 1 teilweise dargestellten Rundballenpresse 10 sind insbesondere mehrere Riemen 12 und Walzen 14, eine Gutaufnahmevorrichtung 16 und eine Bindevorrichtung 18 zu erkennen. Da es sich im übrigen um eine Rundballenpresse 10 herkömmlicher Bauart handelt, wird auf eine weitergehendere Darstellung und Beschreibung verzichtet.

Die Riemen 12 umgeben einen Ballenpreßraum, der in seiner Größe sowohl konstant als auch veränderlich sein kann und in dessen Inneren ein Ballen 20 aus Gut gebildet wird, das der Ballenpreßraum von der Gutaufnahmevorrichtung 16 erhält.

Die Walzen 14 dienen sowohl der Abstützung des Ballens 20 in dem Ballenpreßraum wie auch der Führung und Umlenkung der Riemen 12.

Die Gutaufnahmevorrichtung 16, eine sogenannte Pick-up, nimmt auf dem Boden liegendes Gut auf und fördert es nach oben und hinten unterhalb der Bindevorrichtung 18 durch einen Einlaß 22 in den Ballenpreßraum.

Die Bindevorrichtung 18 ist dazu bestimmt, den Ballen 20 nach seiner Bildung mit Bindemittel 24 zu umwickeln, wozu sie über ein Lager 26 an einem Rahmen 28 der Rundballenpresse 10 in oder im wesentlichen in einer horizontalen Ebene schwenkbar angebracht ist. Die Ausbildung der Bindevorrichtung 18 im einzelnen ergibt sich aus den weiteren Figuren. Bei anderen Ausführungsbeispielen kann sich die Bindevorrichtung 18 aber auch in einer vertikalen oder nahezu vertikalen Ebene bewegen.

Der Bindevorrichtung 18 ist eine Schneidvorrichtung 30 zugeordnet, die betätigt wird, sobald die Bindevorrichtung 18 in ihre in Figur 2 gezeigte Ruhestellung gelangt.

Gemäß Figur 2 enthält die Bindevorrichtung 18 zwei Arme 32, 34, eine Zwangsführung 36, einen lediglich angedeuteten Linearmotor 38 als Teil einer Betätigungsvorrichtung und einen weiteren Linearmotor 39 und ist unterhalb einer nicht gezeigten Deichsel im vorderen Bereich der Rundballenpresse 10 vorgesehen.

Der Ballen 20 wird dadurch gebildet, daß auf einen anfänglich geformten Ballenkern spiralförmig immer weitere Lagen der von der Gutaufnahmevorrichtung 16 durch den Einlaß 22 eingespeisten Gutmatte aufgewickelt werden, bis er seine vorbestimmte Größe erreicht hat. Als Bindemittel 24 wird insbesondere Garn aus Sisal oder Kunststoff verwendet.

Das Lager 26 ist als ein einfacher Stahlzapfen ausgebildet, der sich mit seiner Längsachse senkrecht oder im wesentlichen senkrecht von der Deichsel aus nach unten erstreckt und eine nicht gezeigte Halterung, z. B. einen Splint, zur axialen Sicherung des auf ihm gelagerten Arms 32 enthält.

Die Schneidvorrichtung 30 ist ebenfalls von herkömmlicher Bauart mit einem Messer 40, das mittels eines Gestänges 42 auf einen Amboß 44 zum Abtrennen des Bindemittels 24 gedrückt wird, sobald die Arme 32, 34 an das Gestänge 42 anschlagen. Nach dem Abtrennen der Stränge des Bindemittels 24 hängen noch dessen Enden über die Arme 32, 34 heraus und können somit von der Gutmatte erfaßt werden, sobald die Arme 32, 34 in die Startstellung gelangen.

Der Arm 32 setzt sich aus einem Lagergehäuse 46, einem U-Teil 48, einem Rohr 50 und einer Haltelasche 52 zusammen.

Das Lagergehäuse 46 wird gebildet von einer Hülse 54 und einem Stellarm 56 und ist einenends an dem U-Teil 48 befestigt, z. B. an diesen angeschweißt.

Eine in die Hülse 54 eingearbeitete Bohrung 58 ist dazu bestimmt, in sich das Lager 26 drehbar aufzunehmen und erstreckt sich mit ihrer Längsmittenachse senkrecht oder im wesentlichen senkrecht zu der Längsmittenachse des U-Teils 48 und des Rohrs 50. Die Hülse 54 stellt die Drehverbindung zwischen dem Arm 32 und dem Lager 26 her.

Der Stellarm 56 erstreckt sich in diesem Ausführungsbeispiel von dem oberen Endbereich der Hülse 54 im wesentlichen tangential fort und nimmt mit seiner Längsmittenachse zu der Längsmittenachse des U-Teils 48 einen Winkel von ca. 30° ein. Die Verbindung zwischen der Hülse 54, dem Stellarm 56 und dem U-Teil 48 ist starr. In dem der Hülse 54 abgelegenen Endbereich ist der Stellarm 56 mit einer Bohrung zur Aufnahme eines nicht gezeigten Verbindungselements, z. B. einer Schraube, einem Zapfen, einem Bolzen oder dergleichen zur Verbindung mit dem Linearmotor 38 versehen.

Der U-Teil 48 nimmt die wesentliche Länge des Arms 32 ein und ist so angeordnet, daß er mit dem Boden des "U" an dem Lagergehäuse 46 anliegt. An den dem Lagergehäuse 46 gegenüberliegenden und der Schneidvorrichtung 30 zugelegenen Endbereich ist in den Innenraum des "U" das Rohr 50 eingeschweißt, das sich in derselben Längsrichtung erstreckt. Im Bereich des Lagergehäuses 46 sind die beiden Schenkel des U-Teils 48 von jeweils einer Gelenkbohrung 60 durchdrungen, die konzentrisch zueinander angeordnet sind. Die Bohrung 58 und die Gelenkbohrungen 60 sind nahezu um die Höhe der Schenkel und die Wandstärke der Hülse 54 voneinander getrennt.

Das Rohr 50 nimmt bei diesem Ausführungsbeispiel ca. 1/4 der Länge des Arms 32 ein und reicht vom Ende des U-Teils 48 bis zu der Schneidvorrichtung 30, an deren Gestänge 42 es zur Anlage kommen kann. Durch den Innenraum des Rohrs 50 wird das von dem Innenraum des U-Teils 48 kommende Bindemittel 24 geführt.

Die Haltelasche 52 erstreckt sich in der Richtung der Längsachse des U-Teils 48 radial von dem Lagergehäuse 46 und ungefähr diametral zu dem Stellarm 56 aus fort, hat nahezu die Länge des Rohrs 50 und besteht aus einem Flacheisen. An seinem freien Ende ist eine Bohrung 62 vorgesehen, die der Verbindung mit dem weiteren Linearmotor 39 dient.

Der Arm 34 weist ebenfalls einen U-Teil 48' und ein Rohr 50' auf, die denen des Arms 32 entsprechen, jedoch spiegelbildlich dazu angeordnet sind. Eine ebenfalls vorgesehene Haltelasche 52' nimmt mit ihrer Längsmittenachse zu der des U-Teils 48' eine Neigung von ca. 30° ein, erstreckt sich jedoch im wesentlichen in derselben Richtung wie die Haltelasche 52.

Von den Innenseiten der Schenkel des U-Teils 48' erstrecken sich in den Innenraum des U-Teils 48 Gelenkplatten 64, die ebenfalls von Gelenkbohrungen 60' durchdrungen sind. Die Gelenkbohrungen 60 und 60' können in eine Lage gebracht werden, in der sie sich überdecken und jeweils eine Schraube 66 in sich aufnehmen, um ein Gelenk 68 zu bilden. Anstatt zweier Schrauben 66 kann auch ein durchgehender Bolzen verwendet werden. Mittels der beiden Schrauben 66 werden die beiden Arme 32, 34 schwenkbar miteinander verbunden und können so aus einer Lage, in der sie aneinander anliegen, in eine Vielzahl anderer Lagen geschwenkt werden, in denen sie sich mit den freien Enden mehr und mehr voneinander entfernen.

Die Zwangsführung 36 stellt eine außerhalb des Gelenks 68 vorgesehene Verbindung beider Arme 32, 34 dar, mit der die Stellung der beiden Arme 32, 34 zueinander geändert werden kann; ein Teil dieser Zwangsführung 36 ist der zweite Linearmotor 39, der über zwei Leitungen 70 mit Energie gespeist wird.

Der weitere Linearmotor 39 ist in diesem Ausführungsbeispiel gehäuseseitig mit der Haltelasche 52 und kolbenstangenseitig mit der Haltelasche 52' jeweils schwenkbar verbunden. Da sich die Angriffspunkte des weiteren Linearmotors 39 an den Haltelaschen 52, 52' mit Bezug auf die Schwenkachse des Gelenks 68 gegenüber den U-Teilen 48, 48' befinden, bewirkt eine Längenänderung des weiteren Linearmotors 39 eine Änderung der Lage zwischen den beiden Armen 32, 34.

Der Linearmotor 38 greift einenends ortsfest, wenn auch schwenkbar, an dem Rahmen 28 und anderenends schwenkbar an dem Stellarm 56 an. Eine Längenänderung des Linearmotors 38 führt demnach dazu, daß der Arm 32 mit dem Arm 34 um das Lager 26 geschwenkt wird.

Bei dem weiteren Linearmotor 39, wie auch bei dem Linearmotor 38 kann es sich um einen Elektro-, einen Hydraulik- oder einen Pneumatikmotor handeln. Diese Linearmotoren 38, 39 können doppeltwirkend arbeiten, d. h. mittels derselben Energiequelle in beide Richtungen gedrängt werden, oder nur einfachwirkend, wobei eine der Bewegungen mittels einer Feder oder einer sich aus dem Zug an dem Bindemittel 24 ergebenden Kraft durchgeführt wird.

Die Längenänderung der Linearmotoren 38, 39 nach Maß und Zeitpunkt wird mittels eines nicht dargestellten, vorzugsweise programmierbaren Kleinrechners als möglichen weiteren Teil der Betätigungsvorrichtung gesteuert, in den der Durchmesser, die Breite, die Anzahl der Umwicklungen und andere Größen eingebbar sind. Die Bewegungen der Linearmotoren 38, 39 können sowohl kontinuierlich als auch in kleinen Schritten erfolgen.

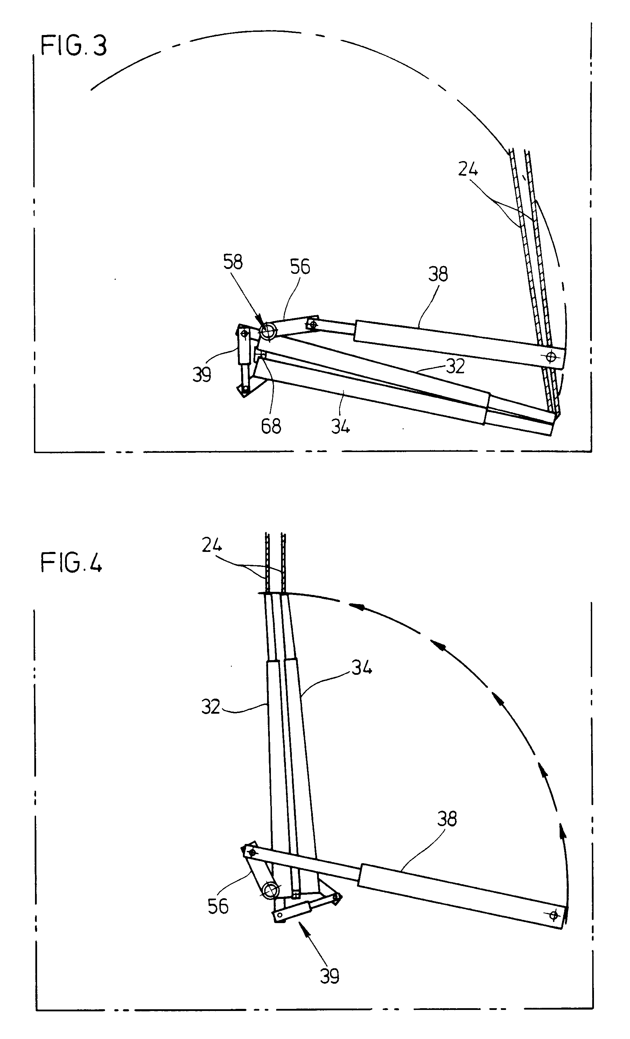

In den schematischen Figuren 3 bis 6 sind einige typische Stellungen der Bindevorrichtung 18 mit den beiden Armen 32, 34 gezeigt und nachfolgend erläutert.

Figur 3 zeigt die Bindevorrichtung 18 in ihrer Ruhestellung, in der der Linearmotor 38 eingefahren und der weitere Linearmotor 39 ausgefahren ist. Demnach liegen die Arme 32, 34 an der Schneidvorrichtung 30 an und befinden sich mit ihren freien Enden an oder nahe einer Stirnseite des Ballens 20. Außerdem liegen die beiden Arme 32, 34 aneinander an. Schließlich ist das Bindemittel 24 noch nicht von dem gerade gebundenen Ballen 20 abgetrennt und erstreckt sich somit zwischen den Enden der Rohre 50, 50' und dem Einlaß 22.

Figur 4 zeigt die Bindevorrichtung 18 in ihrer Startstellung, in der der Linearmotor 38 halb ausgefahren und der weitere Linearmotor 39 noch ausgefahren ist.

Demnach liegen die Arme 32, 34 mit ihren freien Enden unmittelbar vor dem Einlaß 22, um die nunmehr lose herunterhängenden Enden des Bindemittels 24 mit der von der Gutaufnahmevorrichtung 16 geförderten Gutmatte in den Ballenpreßraum einzuführen. Die beiden Arme 32, 34 liegen noch aneinander an.

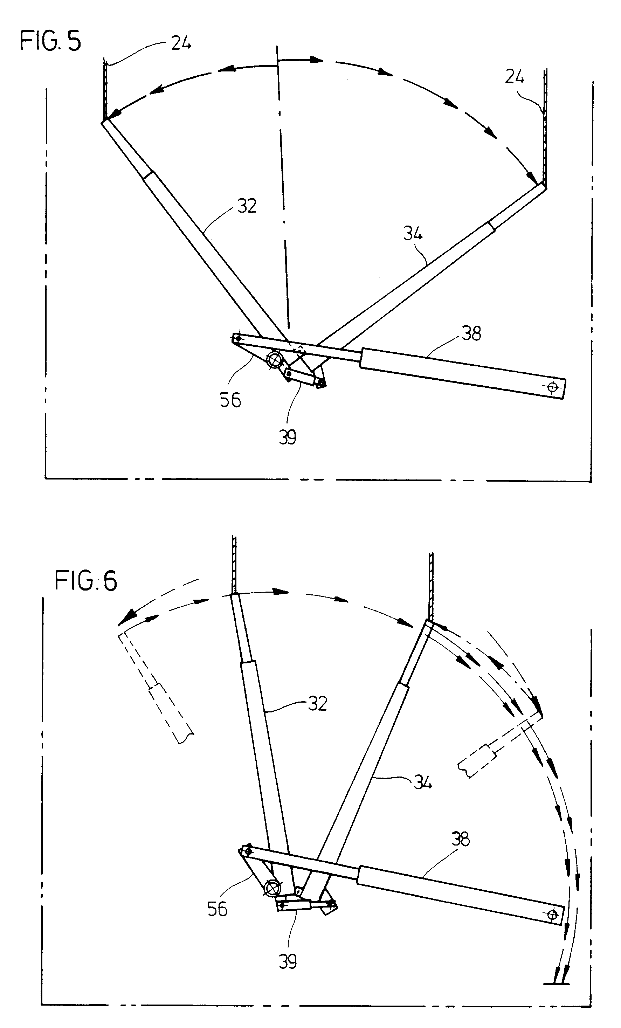

Figur 5 zeigt die Bindevorrichtung 18 in einer Stellung, in der der Linearmotor 38 voll ausgefahren und der weitere Linearmotor 39 voll eingefahren ist. Demnach liegen die Arme 32, 34 mit ihren freien Enden zwar immer noch unmittelbar vor dem Einlaß 22, in den die beiden Stränge des Bindemittels 24 hineinragen; sie befinden sich aber auch ganz nahe der Stirnseiten des Ballens 20, d. h. sie haben die erste Hälfte des Bindewegs - den "Hinweg" - zurückgelegt. Die beiden Arme 32, 34 nehmen eine möglichst divergierende Stellung ein, da die beiden Haltelaschen 52, 52' mittels des sich zusammenziehenden weiteren Linearmotors 39 um die Schwenkachse des Gelenks 68 aufeinander zu gezogen wurden. Es ist ersichtlich, daß der Arm 32 mittels des Linearmotors 38 über die Startstellung hinaus geschwenkt worden ist.

Figur 6 zeigt schließlich, wie die beiden Arme 32, 34 wieder in Richtung auf die Startstellung - dem "Hinweg" - aufeinander zubewegt werden. Je nach der Programmierung des Kleinrechners kann die Bewegung der Arme 32, 34 so gesteuert werden, daß sie in der Startstellung zusammenkommen und erst dann gemeinsam in die Ruhestellung zurückkehren, oder kurz vor Erreichen der Startstellung in Richtung Ruhestellung bewegt werden, in der sie dann zusammenkommen.

Wichtig ist, daß der Bindevorgang in der Mitte der Ballenbreite oder in deren Nähe endet, so daß die letzten Bindemittelwindungen, deren Enden schließlich bis an die eine Stirnseite des Ballens 20 reichen, bei der späteren Handhabung des Ballens 20 nicht so leicht vom Umfang des Ballens 20 abgleiten können. Zur Reduzierung des Bindemittelverbrauchs ist es auch vorteilhaft, wenn die beiden Arme 32, 34 zu der Startstellung, jedenfalls aber von dieser zur Ruhestellung zurück mit hoher Geschwindigkeit bewegt werden, während der eigentliche Bindevorgang mit einer langsameren Geschwindigkeit vonstatten gehen kann.

Nach dem Erreichen der Ruhestellung werden die beiden Stränge des Bindemittels 24 über den Amboß 44 gelegt und von dem mittels der Arme 32, 34 betätigten Messer 40 getrennt.

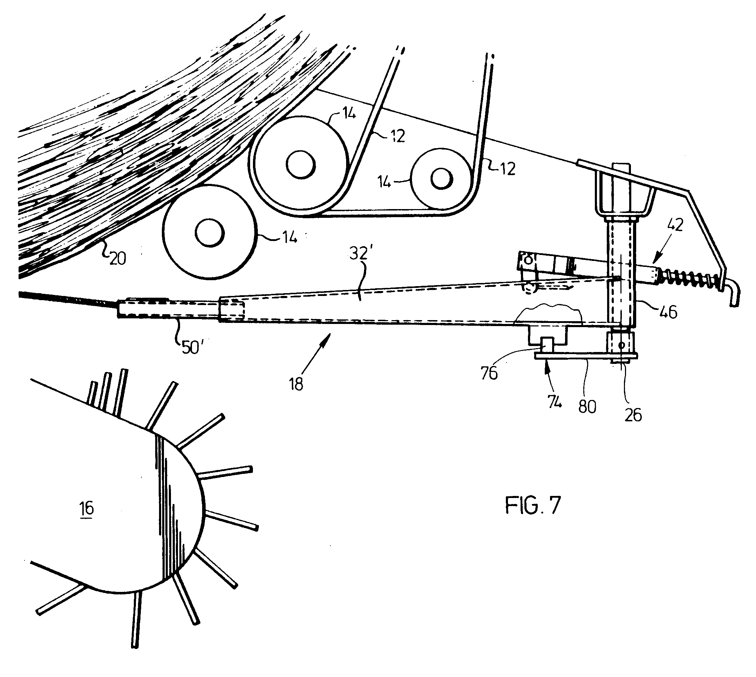

Das zweite Ausführungsbeispiel nach den Figuren 7 bis 11 und die mit ihm erfolgte Bindemittelführung entsprechen dem Prinzip nach dem zuvor beschriebenen.

Die beiden Arme 32', 34' unterscheiden sich von den Armen 32, 34 des ersten Ausführungsbeispiels dadurch, daß keine Haltelaschen 52, 52' angebracht sind, daß sich zwischen ihnen eine Feder 72 erstreckt, und daß an dem Lager 26 ein Anschlag 74 angebracht ist.

Die Änderung der Lage des Arms 34' mit Bezug auf den Arm 32' wird bei diesem Ausführungsbeispiel nicht mittels eines weiteren Linearmotors 39 oder eines Motors überhaupt bewerkstelligt, sondern über die Anlage des zweiten Arms 34' an dem Anschlag 74. Allerdings können, wie in Figur 11 gezeigt, die Haltelaschen 52, 52' auch an den Armen 32' und 34' verbleiben und anstatt des weiteren Linearmotors 39 ein Dämpfungsglied 82 mit einem variablen Dämpfungsgrad aufnehmen, der die Bewegungsgeschwindigkeit der beiden Arme 32', 34' aufeinander zu, d. h. auf ihrem "Rückweg" steuert.

Die Feder 72 ist entweder an nicht näher bezeichneten Stiften oder in Löchern an den U-Teilen 48, 48' der Arme 32', 34' eingehängt und als Schraubenzugfeder ausgebildet, die die Arme 32' und 34' stets aufeinander zudrängt. Ihre Angriffspunkte befinden sich von den dem Lager 26 aus gesehen in dem ersten Viertel der Arme 32', 34'.

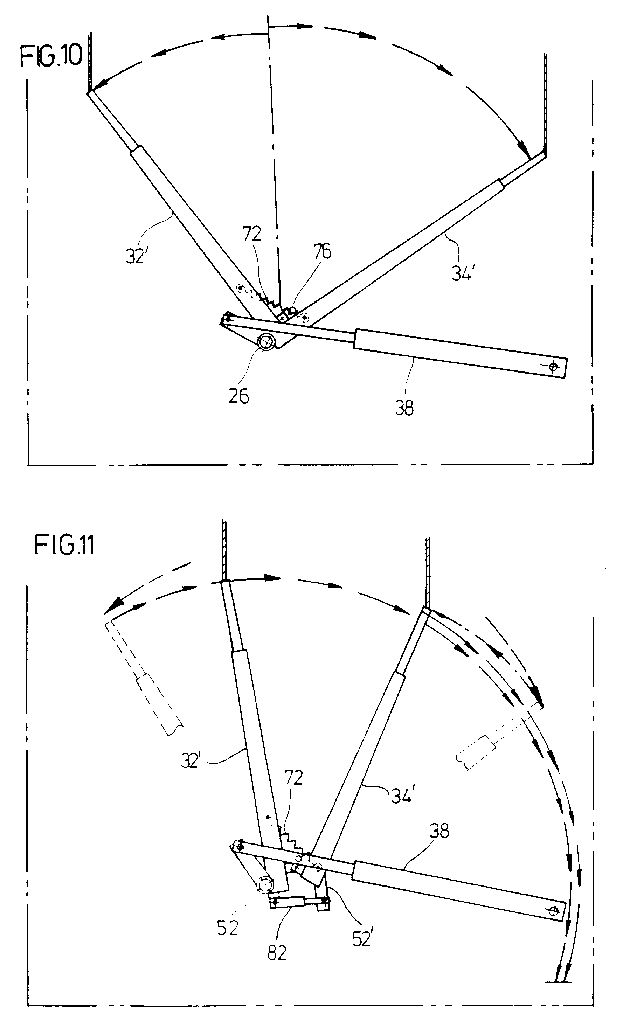

An dem Lager 26 und somit ortsfest ist ein Anschlag 74 mit einem Nocken 76 angebracht, an dem ein an der Unterseite des Arms 34' vorgesehener Steg 78 zur Anlage gebracht werden kann. Bringt man den Mittelpunkt des Lagers 26, den des Gelenks 68 und den Nocken 76 auf eine Linie, wie dies ungefähr in Figur 10 zu sehen ist, so liegt der Nocken 76 auf der Radialen durch das Lager 26 außen, d. h. die Schwenkachse durch das Gelenk 68 befindet sich zwischen dem Lager 26 und dem Nocken 76. Der Nocken 76 wird mittels eines auf das Lager 26 aufgesetzten Hebels 80 in seiner Stellung gehalten.

Die gesamte Bewegung der aus den beiden Armen 32' und 34' bestehenden Einheit der Bindevorrichtung 18 wird mittels des Linearmotors 38 durchgeführt.

Die Führung des Bindemittels 24 von der Ruhestellung zu der Startstellung, von dieser zu den Stirnseiten und zurück und schließlich wieder zurück zur Ruhestellung und die betreffenden Geschwindigkeiten entsprechen denen des ersten Ausführungsbeispiels.

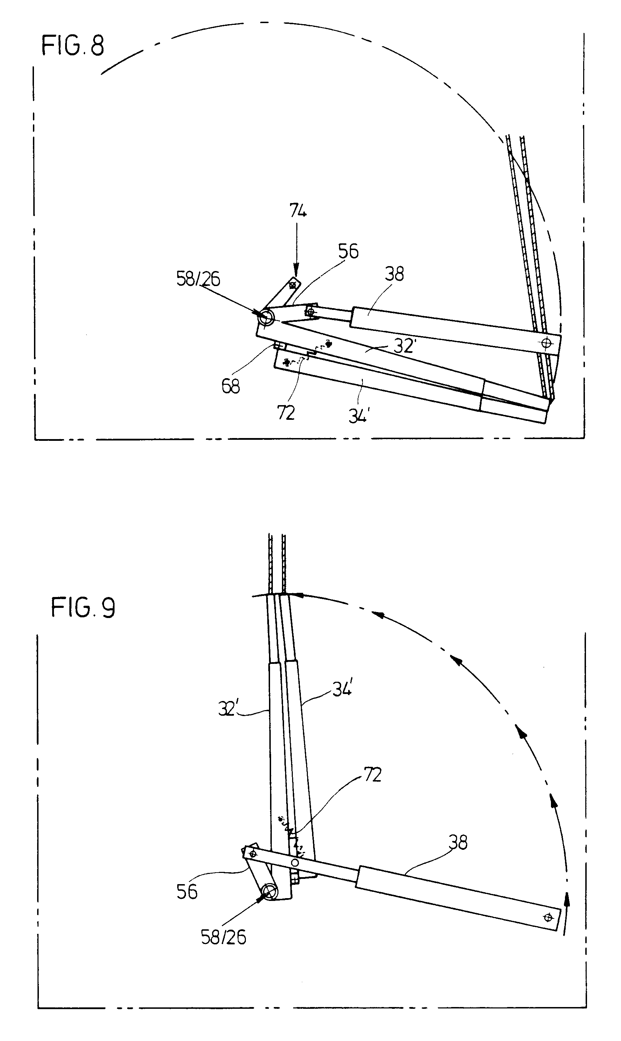

Die Stellung zwischen beiden Armen 32' und 34' ändert sich erst ab der Startstellung, die in Figur 9 erreicht ist. In Verbindung mit Figur 10 ist dann zu erkennen, daß der Arm 32' mittels des Linearmotors 38 über die Startstellung hinausbewegt wird. Aufgrund des Zugs der Feder 72 tendiert der Arm 34' dazu, ebenfalls mit dem Arm 32' weiter zu schwenken. Sobald die beiden Arme 32' und 34' soweit gemeinsam geschwenkt wurden, daß der Arm 34' mit seinem Steg 78 an dem Nocken 76 zur Anlage kommt, bewirkt die exzentrische Anordnung des Gelenks 68 um das Lager 26 herum, daß der Steg 78 radial von dem Lager 26 weg an dem Nocken 76 entlanggleitet und somit bei sich weiter bewegendem Gelenk 68 den Arm 34' zur Stirnseite schwenkt. Sobald sich der Linearmotor 38 wieder zusammenzieht, wird der Arm 34' mittels der Feder 72 wieder zur Startstellung gezogen, von wo aus beide Arme 32' und 34' zur Ruhestellung bewegt werden.

Das erfindungsgemäße Verfahren enthält als die wesentlichen Verfahrensschritte, daß die beiden Arme 32, 32', 34, 34' mit ihren das Bindemittel 24 abgebenden Enden
a) nahe einer Stirnseite des Ballens 20 in einer Ruhestellung gehalten,
b) dann zu einer Startstellung in Ballennähe, insbesondere an der Ballenmitte, geführt,
c) von einem Gelenk 68 aus in Richtung auf die Stirnseiten des Ballens 20 spiegelbildlich oder im wesentlichen spiegelbildlich gespreizt,
d) in Richtung auf die Startstellung zusammengeführt und
e) zu der Ruhestellung zurückgeführt werden.

Diese Verfahrensschritte können auch mit anderen Bindevorrichtungen als den vorgeschlagenen ausgeführt werden.

## Patentansprüche

1. Bindevorrichtung (16) zum Binden eines zylindrischen Ballens (20), insbesondere für eine Rundballenpresse (10), mit zwei Armen (32, 32'), (34, 34') zur Führung des Bindemittels (24) zu einer Startstellung in Eingriff mit dem Ballen (20), die
a) zueinander relativ beweglich sind,
b) gemeinsam eine Ruhestellung an oder nahe einer Stirnseite des Ballens (20) einnehmen und
c) mittels einer Betätigungsvorrichtung (38) entlang der Ballenlängsachse geführt werden,
dadurch gekennzeichnet, daß die Arme (32, 32'), (34, 34') gemeinsam von der Ruhe- in die Startstellung und umgekehrt geführt werden und die Betätigungsvorrichtung eine Zwangsführung (36) zum Spreizen der beiden Arme (32, 32'), (34, 34') enthält, die nach Erreichen der Startstellung die Arme (32, 32'), (34, 34') voneinander weg bewegend zu den Stirnflächen des Ballens (20) und anschließend aufeinander zu bewegend zu der Startstellung zurückführt.

2. Bindevorrichtung nach Anspruch 1, dadurch gekennzeichnet, daß die Arme (32, 32'), (34, 34') von der Startstellung aus spiegelbildlich in bezug auf die Ballenmitte geführt werden.

3. Bindevorrichtung nach Anspruch 1 oder 2, dadurch gekennzeichnet, daß den Armen (32, 32'), (34, 34') eine gemeinsame Schneidvorrichtung (30) für das Bindemittel (24) in oder nahe der Ruhestellung zugeordnet ist.

4. Bindevorrichtung nach einem oder mehreren der vorherigen Ansprüche, dadurch gekennzeichnet, daß die Betätigungsvorrichtung einen Linearmotor (38) enthält und die Arme (32, 32'), (34, 34') durch diesen streckenweise als Einheit um ein ortsfestes Lager (26) schwenkbar sind.

5. Bindevorrichtung nach einem oder mehreren der vorherigen Ansprüche, dadurch gekennzeichnet, daß einer der Arme (34, 34') an dem anderen Arm (32, 32') in einem Gelenk (68) schwenkbar angebracht ist.

6. Bindevorrichtung nach einem oder mehreren der vorherigen Ansprüche, dadurch gekennzeichnet, daß einer der Arme (32, 32') mittels des Linearmotors (38) über seinen gesamten Weg bewegbar ist.

7. Bindevorrichtung nach einem oder mehreren der vorherigen Ansprüche, dadurch gekennzeichnet, daß die Zwangsführung (36) einen weiteren Linearmotor (39) enthält, der einenends an dem einen und anderenends an dem anderen Arm (32) und (34) angreift.

8. Bindevorrichtung nach Anspruch 7, dadurch gekennzeichnet, daß die Bewegungsgeschwindigkeit beider Linearmotoren (38, 39) insbesondere mittels eines Kleinrechners steuerbar ist.

9. Bindevorrichtung nach einem oder mehreren der vorherigen Ansprüche 1 bis 6, dadurch gekennzeichnet, daß das Gelenk (68) mit Abstand um das Lager (26) schwenkbar ist und die Zwangsführung (36) einen Anschlag (74) enthält, an den der nicht unmittelbar mit dem Linearmotor (38) verbundene Arm (34') anlegbar ist.

10. Bindevorrichtung nach Anspruch 9, dadurch gekennzeichnet, daß beide Arme (32', 34') mittels einer Feder (72) ständig aufeinander zugedrängt werden.

11. Bindevorrichtung nach Anspruch 9 oder 10, dadurch gekennzeichnet, daß zwischen den beiden Armen (32', 34') ein Dämpfungsglied (82) vorgesehen ist.

12. Bindevorrichtung nach Anspruch 11, dadurch gekennzeichnet, daß der Dämpfungsgrad des Dämpfungsglieds (82) einstellbar ist.

13. Bindevorrichtung nach einem oder mehreren der vorherigen Ansprüche, dadurch gekennzeichnet, daß die Geschwindigkeit eines oder beider Linearmotoren (38, 39) steuerbar ist.

14. Bindevorrichtung nach Anspruch 13, dadurch gekennzeichnet, daß die Geschwindigkeit der Arme (32, 32'), (34, 34') zwischen der Ruhe- und der Startstellung höher ist als während des Bindevorgangs.

15. Verfahren zum Binden eines zylindrischen Ballens (20) mittels zweier in bezug aufeinander beweglicher Arme (32, 32'), (34, 34'), gekennzeichnet durch folgende Verfahrensschritte:
die beiden Arme (32, 32'), (34, 34') werden mit ihren das Bindemittel (24) abgebenden Enden
a) **gemeinsam** nahe einer Stirnseite des Ballens (20) in einer Ruhestellung gehalten,
b) dann **gemeinsam** zu einer Startstellung in Ballennähe, insbesondere an der Ballenmitte, geführt,
c) von einem Gelenk (68) aus in Richtung auf die Stirnseiten des Ballens (20) spiegelbildlich oder im wesentlichen spiegelbildlich gespreizt,
d) in Richtung auf die Startstellung zusammengeführt und
e) **gemeinsam** zu der Ruhestellung zurückgeführt.

## Claims

1. A binding device (16) for binding a cylindrical bale (20), especially for a round baler (10), with two arms (32, 32'), (34, 34') for guiding the binding medium (24) to a starting position in engagement with the bale (20) and which are:
a) movable relative to one another,
b) assume a common rest position at or near to one end of the bale (20) and
c) are guided along the longitudinal axis of the bale by means of an operating device (38),
characterized in that the arms (32, 32'), (34, 34') are guided together from the rest position into the start position and vice versa and the operating device involves positive guiding means (36) for spreading the two arms (32, 32'), (34, 34'), which means guide the arms (32, 32'), (34, 34') apart from one another to the end faces of the bale (20), after reaching the start position, and then back towards one another to the start position.

2. A binding device according to claim 1, characterized in that the arms (32, 32'), (34, 34') are guided in mirror image fashion relative to the centre of the bale out from the start position.

3. A binding device according to claim 1 or 2, characterized in that a common cutting device (30) for the binding medium (24) is associated with the arms (32, 32'), (34, 34') in or close to the rest position.

4. A binding device according to one or more of the preceding claims, characterized in that the operating device includes a linear motor (38) and the arms (32, 32'), (34, 34') can be pivoted thereby in part of the path as a unit about a positionally fixed bearing (26).

5. A binding device according to one or more of the preceding claims, characterized in that one of the arms (34, 34') is pivotally fitted to the other arm (32, 32') by a joint (68).

6. A binding device according to one or more of the preceding claims, characterized in that one of the arms (32, 32') is movable by the linear motor (38) over the whole of its path.

7. A binding device according to one or more of the preceding claims, characterized in that the positive guiding means (36) includes a further linear motor (39), which engages one arm (32) at one end and the other arm (34) at the other end.

8. A binding device according to claim 7, characterized in that the speed of movement of the two linear motors (38, 39) can be controlled, in particular by means of microprocessor.

9. A binding device according to one or more of the preceding claims 1 to 6, characterized in that the joint (68) can pivot about the bearing (26) at a distance therefrom and the positive guiding means (36) includes a stop (74) on which the arm (34') not directly connected to the linear motor (38) can bear.

10. A binding device according to claim 9, characterized in that the two arms (32', 34') are constantly biased towards from each other by means of a spring (72).

11. A binding device according to claim 9 or 10, characterized in that a damping element (82) is provided between the two arms (32', 34').

12. A binding device according to claim 11, characterized in that the degree of damping of the damping element (82) is adjustable.

13. A binding device according to one or more of the preceding claims, characterized in that the speed of one or both of the linear motors (38, 39) can be controlled.

14. A binding device according to claim 13, characterized in that the speed of the arms (32, 32'), (34, 34') is higher between the rest and start positions than during the binding operation.

15. A method of binding a cylindrical bale (20) by means of two arms (32, 32'), (34, 34') movable relative to one another, characterized by the following method steps:
the ends of the two arms (32, 32'), (34, 34') delivering binding medium (24) are
a) together held in a rest position near one end face of the bale (20),
b) then guided together to a start position in the vicinity of the bale, in particular at the bale centre,
c) spread out from a joint (68) in the direction of the end faces of the bale (20) in mirror image or substantially mirror image fashion,
d) guided towards in the direction of the start position and
e) guided back together to the rest position.

## Revendications

1. Dispositif de liage (16) pour attacher une balle cylindrique (20), notamment pour une presse à balles rondes (10), comportant deux bras (32, 32'), (34, 34') pour le guidage du lien (24) vers une position de départ en contact avec la balle (20), ces deux bras
a) étant mobiles l'un par rapport à l'autre,
b) prenant ensemble une position de repos contre un côté frontal de la balle (20) ou à proximité immédiate de celui-ci, et
c) pouvant être guidés le long de l'axe longitudinal de la balle au moyen d'un dispositif d'actionnement (38),
caractérisé en ce que les bras (32, 32'), (34, 34') sont amenés ensemble de la position de repos à la position de départ et inversement, et en ce que le dispositif d'actionnement comprend un guidage forcé (36) pour écarter les deux bras (32, 32'), (34, 34') qui, une fois la position de départ atteinte, les écarte l'un de l'autre par rapport aux surfaces frontales de la balle (20) et les ramène ensuite l'un sur l'autre par rapport à la position de départ.

2. Dispositif de liage selon la revendication 1, caractérisé en ce que les bras (32, 32'), (34, 34') sont guidés, à partir de la position de départ, selon une symétrie spéculaire, par rapport au milieu de la balle.

3. Dispositif de liage selon la revendication 1 ou 2, caractérisé en ce qu'il est associé aux bras (32, 32'), (34, 34') un dispositif de sectionnement (30) commun pour le lien (24), dans la position de repos ou à proximité de celle-ci.

4. Dispositif de liage selon une ou plusieurs des revendications précédentes, caractérisé en ce que le dispositif d'actionnement contient un moteur linéaire (38) et en ce que les bras (32, 32'), (34, 34') peuvent pivoter par endroits en tant qu'unité, grâce à celui-ci, autour d'un pivot fixe (26).

5. Dispositif de liage selon une ou plusieurs des revendications précédentes, caractérisé en ce que l'un (34, 34') des bras est monté pivotant sur l'autre bras (32, 32') dans une articulation (68).

6. Dispositif de liage selon une ou plusieurs des revendications précédentes, caractérisé en ce que l'un (32, 32') des bras peut être déplacé sur la totalité de son trajet au moyen du moteur linéaire (38).

7. Dispositif de liage selon une ou plusieurs des revendications précédentes, caractérisé en ce que le guidage forcé (36) contient un moteur linéaire (39) supplémentaire, qui attaque par une extrémité un bras et par l'autre extrémité l'autre bras (32) et (34).

8. Dispositif de liage selon la revendication 7, caractérisé en ce que la vitesse de déplacement des deux moteurs linéaires (38, 39) peut être commandée, notamment au moyen d'un mini-ordinateur.

9. Dispositif de liage selon une ou plusieurs des revendications précédentes 1 à 6, caractérisé en ce que l'articulation (68) peut pivoter avec un écartement autour du pivot (26) et en ce que le guidage forcé (36) comporte une butée (74) contre laquelle peut s'appliquer le bras (34') non directement relié au moteur linéaire (38).

10. Dispositif de liage selon la revendication 9, caractérisé en ce que les deux bras (32', 34') sont poussés en permanence l'un vers l'autre au moyen d'un ressort (72).

11. Dispositif de liage selon la revendication 9 ou 10, caractérisé en ce qu'il est prévu, entre les deux bras (32', 34') un élément d'amortissement (82).

12. Dispositif de liage selon la revendication 11, caractérisé en ce que le niveau d'amortissement de l'élément d'amortissement (82) est réglable.

13. Dispositif de liage selon une ou plusieurs des revendications précédentes, caractérisé en ce que la vitesse d'un ou des deux moteurs linéaires (38, 39) peut être commandée.

14. Dispositif de liage selon la revendication 13, caractérisé en ce que la vitesse des bras (32, 32'), (34, 34') est plus grande entre la position de repos et la position de départ que pendant l'opération de liage.

15. Procédé pour attacher une balle cylindrique (20) au moyen de deux bras (32, 32'), (34, 34') mobiles l'un par rapport à l'autre, caractérisé par les étapes suivantes :
les deux bras (32, 32'), (34, 34') sont, avec leurs extrémités fournissant le lien (24),
a) maintenus **ensemble** à proximité d'un côté frontal de la balle (20), dans une position de repos,
b) amenés ensuite **ensemble** vers une position de départ à proximité de la balle, notamment au milieu de la balle,
c) écartés par une articulation (68) en direction des côtés frontaux de la balle (20) selon une symétrie spéculaire ou sensiblement spéculaire,
d) réunis en direction de la position de départ, et
e) ramenés **ensemble** vers la position de repos.
